Europäisches Patentamt

European Patent Office

Office européen des brevets

(11) Numéro de publication: **0 312 450**
A1

# (12) DEMANDE DE BREVET EUROPEEN

(21) Numéro de dépôt: 88402579.2

(22) Date de dépôt: 12.10.88

(51) Int. Cl.⁴: **B 61 D 19/02**
B 60 J 5/06

(30) Priorité: 14.10.87 FR 8714187

(43) Date de publication de la demande:
19.04.89 Bulletin 89/16

(84) Etats contractants désignés:
AT BE CH DE ES FR GB GR IT LI LU NL SE

(71) Demandeur: FAIVELEY ENTREPRISES
93, rue du Docteur-Bauer
F-93407 Saint-Ouen Cedex (FR)

(72) Inventeur: Favrel, Michel
21 Avenue Jeanne d'Arc
F-94170 Le Perreux Sur Marne (FR)

(74) Mandataire: Bouju, André
Cabinet Bouju 38 avenue de la Grande Armée
F-75017 Paris (FR)

(54) Porte louvoyante pour train rapide.

(57) Le bord avant (51) du vantail (2) est guidé par une glissière (3) présentant une région oblique (4) pour l'engagement du vantail (2) dans le cadre (1) au voisinage de la position de fermeture.

Le bord avant (51) du vantail (2) s'engage dans une rainure (64) du montant (1) associé en position de fermeture. Pour permettre cet engagement, la glissière (3) présente au-delà du tronçon oblique (4) un tronçon (78) sensiblement parallèle au plan de fermeture (P).

Utilisation pour rendre la porte particulièrement résistante aux écarts de pression, notamment lors du franchissement des tunnels à grande vitesse.

FIG.3

**Description**

## Porte louvoyante pour train rapide

La présente invention concerne une porte à mouvement louvoyant pour train rapide.

On connaît de telles portes d'après les FR - A -2 133 309, 2 278 893 et 2 387 343. Suivant ces documents, la porte comporte un cadre fixe et au moins un vantail coulissant associé à des moyens de guidage liés au cadre pour donner au vantail un mouvement transversal au cadre lorsque le vantail se trouve au voisinage de sa position de fermeture, de manière à engager le vantail transversalement dans le cadre lors de la fermeture et à le dégager du cadre lors de l'ouverture.

De telles portes présentent un intérêt particulier pour les véhicules de transport en commun. En effet, contrairement aux portes simplement coulissantes, elles ne nécessitent pas de prévoir dans l'épaisseur de la carrosserie un logement capable de recevoir le vantail en position d'ouverture. De plus, en position fermée, les portes à mouvement louvoyant ne forment aucun décrochement dans la face extérieure de la carroserie. Ceci est important pour l'aérodynamisme à grande vitesse.

On désigne ci-après par bord avant du vantail le bord qui est menant lors du mouvement de fermeture, et par bord arrière du vantail le bord opposé au bord avant.

Dans les réalisations connues, le vantail est guidé, au voisinage de son bord avant, par deux glissières, supérieure et inférieure, dans chacune desquelles circule un galet monté à l'extrémité d'une patte fixée au vantail. En position de fermeture, la glissière retient le vantail à l'égard des efforts transversaux. Au voisinage du bord arrière, cette fonction est assurée par une serrure.

Lors des passages dans les tunnels, les portes de véhicule ferroviaire subissent des chocs importants dûs au changement brutal de la pression. L'importance de ces chocs est fonction de la vitesse de circulation du train. A partir d'une certaine vitesse, le système de retenue évoqué plus haut ne suffit plus pour assurer la sécurité de la porte en position de fermeture. En particulier, au voisinage du bord avant du vantail, les glissières, les galets et les pattes, et les moyens d'attache de ces divers éléments devraient être considérablement renforcés pour que leur fiabilité soit assurée. De plus, ces moyens de guidage agissant en haut et en bas de la porte sont mal placés pour empêcher la flexion du vantail sous l'effet de la pression.

Le but de l'invention est ainsi de proposer une porte louvoyante particulièrement résistante aux variations de pression s'exerçant sur son vantail.

Suivant l'invention, la porte à mouvement louvoyant comportant un cadre fixe et au moins un vantail coulissant mobile entre une position de fermeture, dans laquelle ledit vantail s'étend dans le cadre sensiblement dans un plan de fermeture, et une position d'ouverture, le vantail étant associé à des moyens de guidage liés au cadre pour donner au vantail d'une part un mouvement transversal au cadre de manière à engager transversalement le vantail dans le cadre lors d'un mouvement vers la position de fermeture et à le dégager transversalement du cadre lors d'un mouvement vers la position d'ouverture, et d'autre part, au moins au voisinage de la position d'ouverture, un mouvement de coulissement sensiblement parallèle au plan de fermeture, est caractérisée en ce qu'un bord avant du vantail, qui est menant lors du mouvement de fermeture, et un montant associé du cadre, présentent des moyens d'interengagement mutuel qui assurent une retenue du vantail à l'encontre des efforts transversaux lorsque le vantail est en position de fermeture, ces moyens d'interengagement étant mutuellement interengageables et dégageables par mouvement relatif correspondant à celui du bord avant du vantail par rapport au cadre au voisinage de la position de fermeture.

Ainsi, en position de fermeture, le bord avant du vantail est en prise directe avec le cadre, de sorte que les moyens de guidage n'ont plus à assurer de retenue à l'égard des efforts dûs aux variations de pression. De plus, l'interengagement précité peut avoir lieu en tout point voulu de la hauteur et même, selon une version avantageuse de l'invention, sensiblement sur toute la hauteur du bord avant et du montant. Les risques de flexion de la porte sont donc éliminés grâce à des moyens particulièrement simples et économiques.

On connaît certes d'après le DE - C - 695 466 une porte simplement coulissante dont le bord avant présente une garniture en caoutchouc qui coopère par interengagement avec une garniture complémentaire du cadre lorsque le vantail est en position de fermeture. Mais cette garniture souple ne sert qu'à l'étanchéité, elle ne fournit pas de sécurité mécanique à l'égard des efforts transversaux. De plus, s'agissant d'une porte strictement coulissante, le problème est différent car les glissières assurent un meilleur soutien que dans le cas visé par l'invention, des portes louvoyantes, et dans lesquelles, traditionnellement, le mouvement d'ouverture de la porte commence par un mouvement de déboîtement vers l'extérieur. Une variation de pression peut provoquer accidentellement un tel déboîtement, alors qu'elle ne peut pas provoquer un coulissement parallèle à la carrosserie du véhicule.

De préférence, la porte comprenant des moyens d'appui du vantail au voisinage d'un bord arrière dudit vantail en position de fermeture, et des moyens de verrouillage du bord arrière du vantail en position de fermeture, les moyens de verrouillage sont du type à effet de came capable de serrer le bord arrière du vantail contre les moyens d'appui. Il est en outre préférable de prévoir au moins deux unités de verrouillage à effet de came, réparties sur la hauteur du vantail.

Ainsi, la tenue de la porte en position de fermeture se trouve également renforcée le long du bord arrière du vantail.

D'autres particularités et avantages de l'invention ressortiront encore de la description ci-après. Aux dessins annexés, donnés à titre d'exemples non limitatifs :

- les figures 1 à 4 sont des schémas en coupe horizontale d'une porte conforme à l'invention, vue pardessus, respectivement en position de fermeture du vantail, en position de décollement du bord arrière du vantail, en position de dégagement des moyens d'interengagement mutuel, et en position de coulissement ;

- les figures 5 et 6 sont des vues schématiques en coupe horizontale des moyens assurant au voisinage du bord arrière le guidage du vantail en pivotement autour de son bord avant, respectivement en position de fermeture du vantail, et en position de fin de pivotement ;

- la figure 7 est une vue schématique en élévation et en coupe montrant le mécanisme moteur et stabilisateur ;

- la figure 8 est vue en élévation, avec arrachements, de la face intérieure de la porte ;

- la figure 9 est une vue latérale en bout de la porte, visualisant plus particulièrement les moyens de verrouillage ;

- la figure 9A est un détail de la figure 9, à échelle agrandie ; et

- la figure 10 est une vue en coupe horizontale, avec arrachements, à échelle agrandie, montrant le détail des bords avant et arrière du vantail, et des montants associés du cadre.

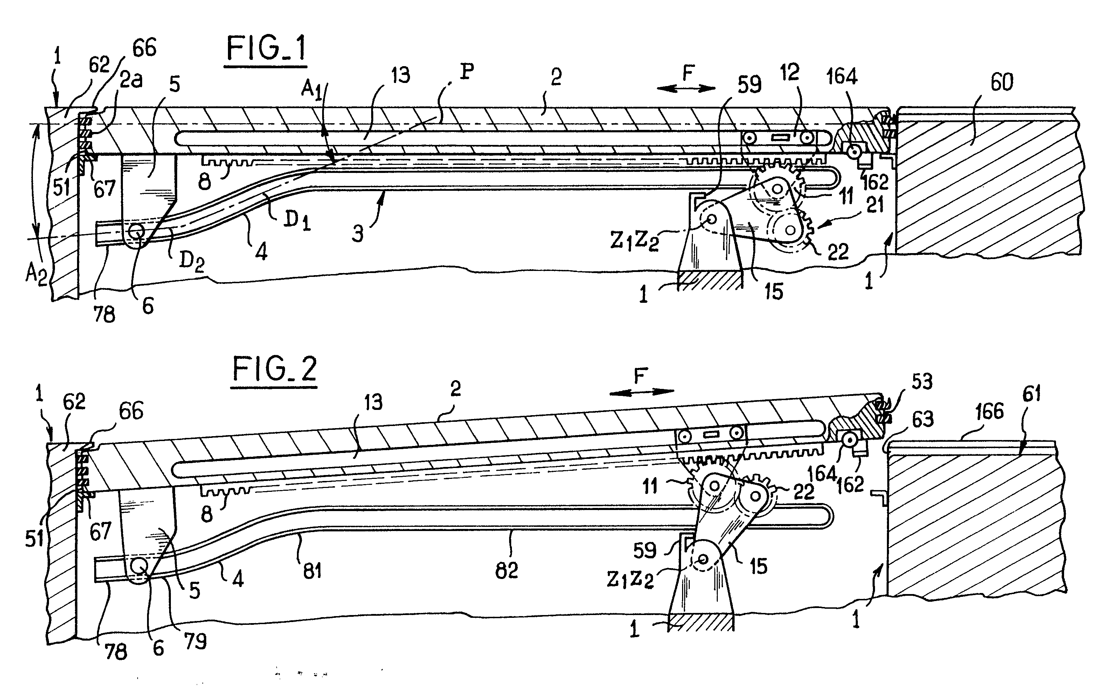

Dans le mode de réalisation schématique des figures 1 à 4, la porte à mouvement louvoyant comporte un cadre fixe 1 et un vantail coulissant 2 associé à des moyens de guidage liés au cadre 1 pour engager transversalement le vantail dans le cadre lorsque le vantail passe de sa position d'ouverture à sa position de fermeture, et pour le dégager en sens inverse lors du mouvement inverse.

Un joint périphérique 2a fixé au pourtour du vantail assure l'étanchéité du vantail 2 dans le cadre 1 en position de fermeture. Ce joint 2a est du type gonflable pour être à l'épreuve des différences de pression.

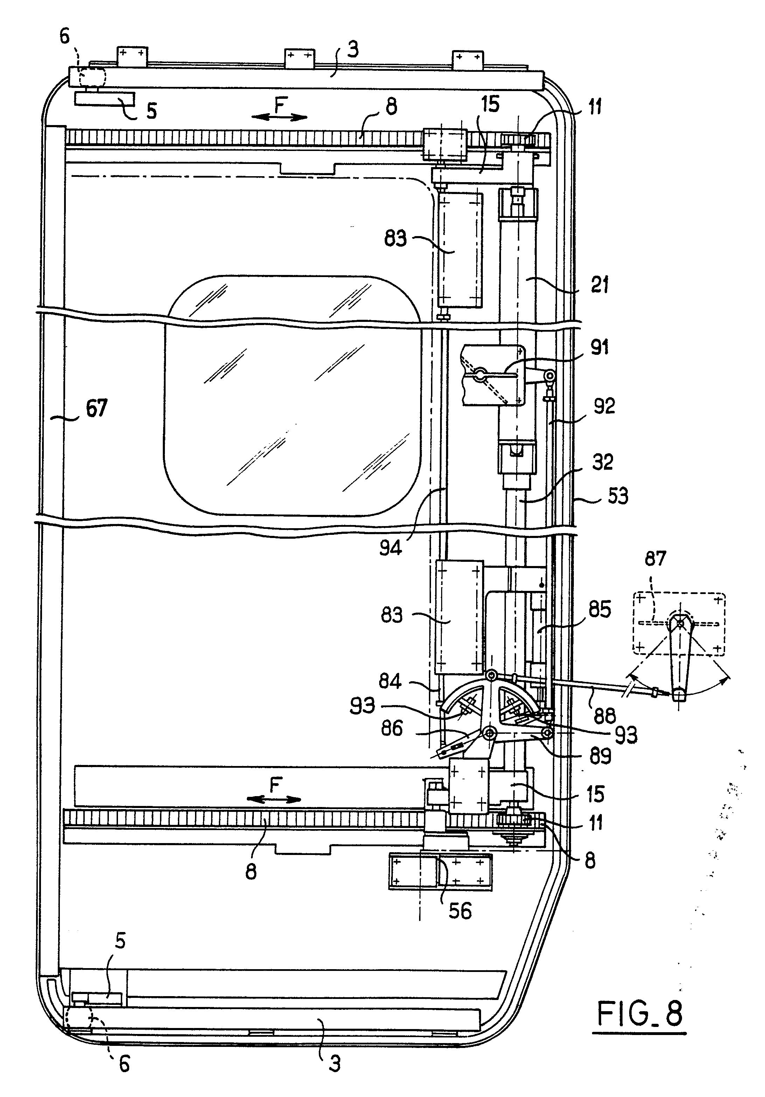

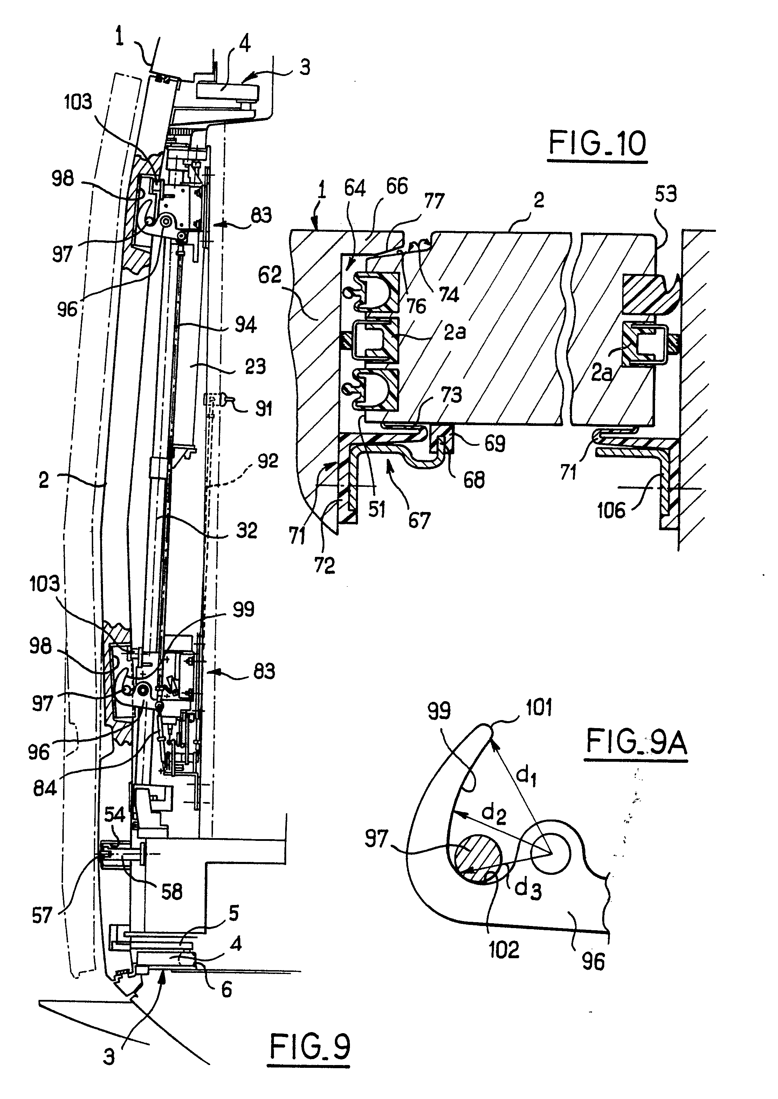

Pour le guidage d'une région avant du vantail, adjacente au bord avant 51 du vantail, qui est le bord menant lors du mouvement de fermeture, les moyens de guidage reliés au cadre comportant deux glissières 3 respectivement inférieure et supérieure (voir aussi figures 8 et 9) dont chacune présente une partie intermédiaire oblique 4 pour assurer le mouvement transversal précité du vantail 2 en ce qui concerne ladite région avant de celui-ci. La direction D1 des parties intermédiaires 4 forme avec le plan de fermeture P, dans lequel se trouve sensiblement le vantail en position de fermeture, un angle A1 s'ouvrant vers le montant 62 du cadre qui est adjacent au bord avant 51 lorsque le vantail est en position de fermeture. Le vantail 2 porte, sur des pattes 5 fixées à sa face intérieure au voisinage du bord avant 51, des doigts de guidage constitués chacun par un galet 6 engagé dans l'une des glissières 3.

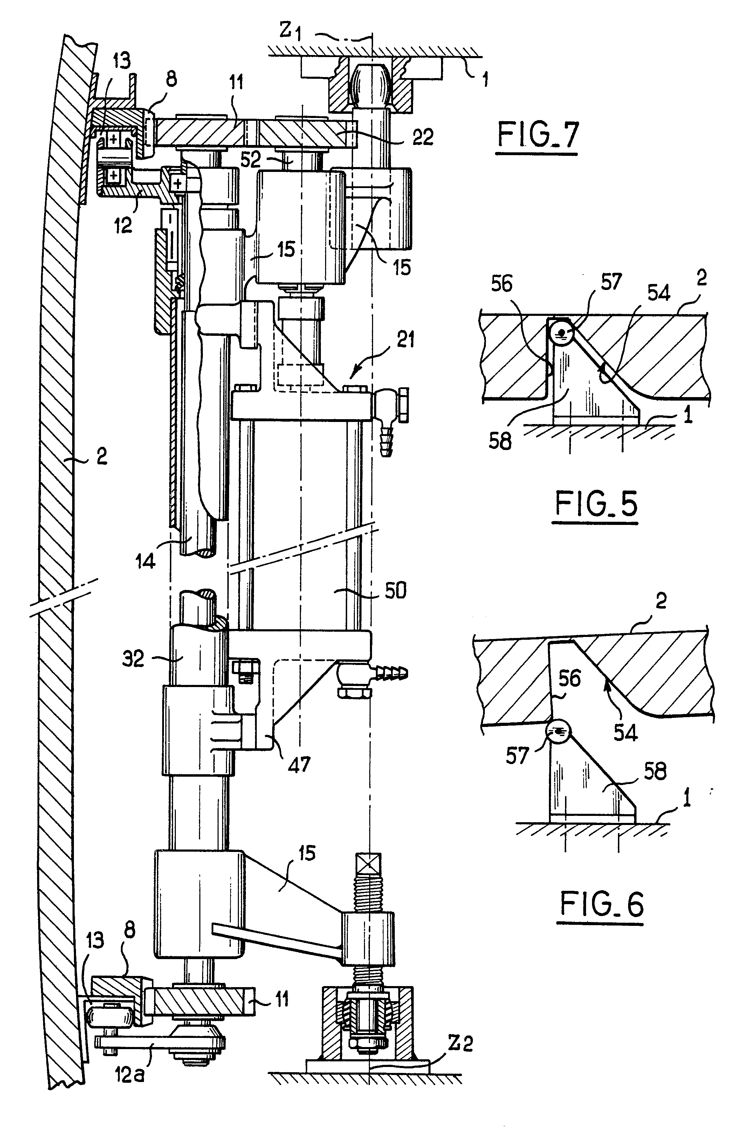

Pour éviter le basculement du vantail 2 autour d'un axe qui lui serait perpendiculaire, et éviter ainsi toute dureté de coulissement, le vantail 2 est relié au cadre 1 par un dispositif stabilisateur comprenant sur la face intérieure du vantail deux crémaillères écartées 8, parallèles au coulissement (flèche F) et associées chacune à un pignon 11 porté rotativement par un chariot 12 monté coulissant dans une glissière 13 prévue dans la face intérieure du vantail 2 parallèlement aux crémaillères 8. Les pignons 11 (figure 7) sont accouplés par un arbre de conjugaison 14, transversal aux glissières 13, voisin d'un montant 60 du cadre 1. Le montant 60 est opposé au montant 62.

Deux biellettes 15 sont articulées au cadre 1 selon un même axe Z1-Z2 parallèle à l'arbre 14. Leur autre extrémité est liée rigidement à un tube commun 32 qui entoure l'arbre 14 et peut tourner librement autour de lui. Les biellettes 15 sont ainsi articulées aux chariots 12.

Le pignon 11 supérieur engrène en outre avec un pignon moteur 22 lié en rotation à l'arbre de sortie 52 d'un moteur 21 dont le corps 50 est rendu solidaire du tube 32, donc des biellettes 15.

Dans le mode de réalisation représenté, le moteur 21 est un moteur pneumatique dans lequel, comme l'enseigne le FR-A-2 387 343, l'écrou immobilisé en rotation d'un système vis-écrou réversible est constitué en piston de vérin à double effet, la vis du système vis-écrou constituant l'arbre de sortie 52. Ainsi, le coulissement du piston fait tourner l'arbre de sortie 52.

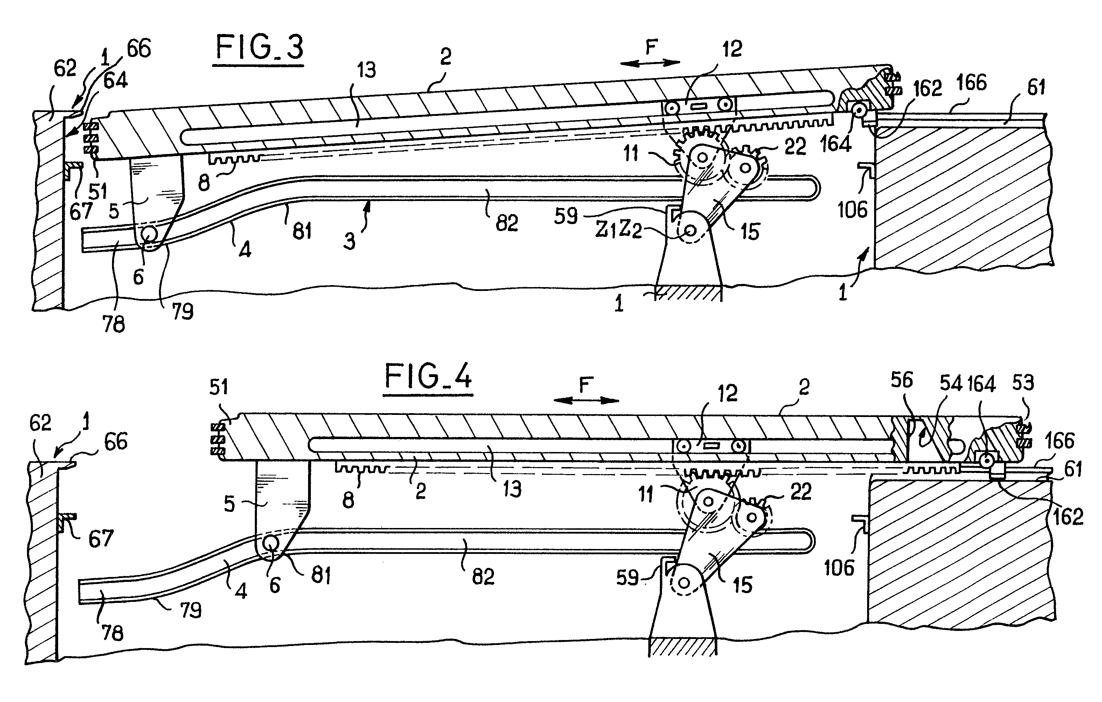

Comme le montrent les figures 4 à 6, pour le guidage d'une région arrière du vantail, adjacente au bord arrière 53 de celui-ci, le vantail 1 comporte sur sa face intérieure, non loin dudit bord arrière 53, un renfoncement 54 dont une face 56 éloignée du bord 53 est sensiblement perpendiculaire à la direction du coulissement (direction des crémaillères 8). Comme le montrent les figures 5 et 6, les moyens de guidage liés au cadre comprennent un galet 57 monté en rotation selon un axe sensiblement parallèle à l'arbre 14 à l'extrémité d'une console 58 fixée rigidement au cadre 1. Lorsque le vantail 2 est en position de fermeture, le galet 57 se trouve au fond du renfoncement 54 sensiblement contre la face 56.

Pour ouvrir le vantail 2, le moteur 21 est mis en fonctionnement dans un sens tel que le pignon 11 tend à parcourir la crémaillère 8 dans le sens allant du bord arrière 53 vers le bord avant 51 du vantail. Au départ, l'appui de la face 56 du renfoncement 54 contre le galet 57 empêche le coulissement du vantail 2. C'est donc bien le pignon 11 qui parcourt la crémaillère 8 empêchée de se déplacer longitudinalement. Ce mouvement du pignon 11 entraîne une rotation de la biellette 15 autour de l'axe Z1-Z2 (voir figures 1 et 2) ce qui donne au vantail 2 un mouvement transversal très voisin d'un pivotement autour d'un axe passant par le bord avant 51 du vantail. Au stade représenté à la figure 2, le pivotement de la biellette 15 vient d'être arrêté par une butée 59 fixe par rapport au cadre 1 tandis que le bord arrière 53 du vantail 2 s'est juste dégagé du cadre 1, et que le galet 57 (figure 6) s'est juste dégagé du renfoncement 54 après avoir roulé contre la face 56.

D'autres moyens de guidage de la région arrière du vantail vont alors intervenir. Ces moyens comprennent une glissière en contre-dépouille 61 pratiquée dans la paroi extérieure du véhicule parallèlement à la direction du coulissement souhaité. La glissière 61 est destinée à recevoir un doigt de guidage 162 en forme de crochet ou de T, prévu sur la face intérieure du vantail 2 au voisinage immédiat du bord arrière 53. Dans la position de fin de pivotement de la biellette 15 (figure 2) le doigt 162 est sensiblement en face de l'extrémité ouverte 63 de la glissière 61.De plus, le vantail 2 porte au voisinage immédiat du doigt 162, un galet 164 adapté à rouler sur une piste 166 prévue sur la paroi extérieure du véhicule le long de la glissière 61. Le doigt 162 limite l'écartement du vantail relativement à la carosserie du véhicule et le galet 164 empêche le frottement contre la carosserie.

Ainsi, au cours de la suite du mouvement de rotation du pignon 11, le vantail 2 est entraîné en coulissement par rapport au cadre 1. Le guidage correspondant est assuré par l'ensemble comprenant la glissière 61, le doigt 162, le galet 164 et la piste 166 dans la région arrière du vantail 1, et par l'ensemble glissières 3 - galets 6 dans la région avant du vantail 2. Cette situation est représentée aux figures 3 et 4.

Conformément à l'invention, le bord avant 51 du vantail 2 et le montant associé 62 du cadre 1 présentent des moyens d'interengagement mutuel sensiblement rigides qui assurent une retenue du vantail 2 à l'encontre des efforts transversaux lorsque le vantail est en position de fermeture.

Dans l'exemple représenté, ces moyens comprennent une rainure en U 64 (figure 3) dans laquelle le bord avant 51 du vantail s'engage lorsque le vantail 1 termine son mouvement de fermeture et dont le bord avant 51 se dégage lorsque le vantail 1 commence son mouvement d'ouverture à partir de la position de fermeture. Ces mouvements relatifs seront mieux compris dans la suite de la description.

Comme le montre la figure 10, la rainure en U 64 est constituée entre un bec sensiblement rigide 66 que présente le montant 62 du cadre dans le prolongement de la paroi extérieure de la carosserie du véhicule, et un profil sensiblement rigide en forme générale d'équerre 67 fixé au montant 1. Le profil 67 présente en direction du vantail 2 un rebord 68 garni d'un liseré en matière plastique 69. Il est en outre prévu un joint 71 dont une aile d'ancrage 72 est pincée entre l'équerre 67 et le montant 62 du cadre 1. Le joint 71 a une aile d'obturation 73 en forme d'épingle à cheveux dont le côté concave est tourné vers le montant 62. Cette aile 73 s'appuie sur la face intérieure du vantail 2 entre le bord avant 51 et le liseré 69. Le joint 71, qui entoure l'ouverture du cadre, assure l'étanchéité lorsque le joint 2a est hors pression (véhicule en stationnement ou défaillance du système).

Le vantail 2 présente sur sa face extérieure à partir du bord 51 un dégagement 74 recevant en position de fermeture le bec 66. Les faces adjacentes 76 et 77, sensiblement rigides, du dégagement 74 et du bec 66 respectivement, au lieu d'être en contact de surfaces l'une avec l'autre, présentent, vues en section droite, des courbures différentes et un léger jeu entre elles de manière à permettre le pivotement du vantail 2 autour du liseré 69 moyennant déformation de l'aile 73 du joint 71, lors de la phase initiale de pivotement du vantail 2 au début du mouvement d'ouverture (voir figures 1 et 2).

Les moyens d'interengagement précités, dont l'équerre 67 est représentée à la figure 8, s'étendent sensiblement sur toute la hauteur du bord avant du vantail 2 et du montant de cadre associé.

Selon une autre particularité importante de l'invention, les moyens de guidage sont conçus pour guider le bord avant 51 du vantail 2 selon une direction D2 entre la position de fermeture complète représentée à la figure 1 et une position d'ouverture partielle représentée à la figure 3, dans laquelle les moyens d'interengagement du bord avant 51 et du montant correspondant 62 du cadre sont mutuellement dégagés.

Dans l'exemple représenté où les moyens de guidage du bord avant 51 sont constitués par la glissière 3, celle-ci présente au-delà du tronçon oblique 4 en direction du montant 62, un tronçon 78 s'étendant selon la direction D2. Entre la position de fermeture complète (figure 1) et la position de dégagement des moyens d'interengagement mutuel (figure 3), chaque galet 6 parcourt le tronçon 78 de la glissière 3 associée. A l'issue de ce parcours, le galet rencontre un premier coude 79 pour le passage au tronçon oblique 4, puis un deuxième coude 81, en sens opposé, pour le passage à un tronçon rectiligne 82 sensiblement parallèle au plan de fermeture.

La direction D2 est quasiment parallèle au plan P, mais fait cependant avec lui un petit angle A2, nettement inférieur à l'angle A1. Par rapport au plan P, l'inclinaison de la direction D2 selon l'angle A2 est de même sens que l'inclinaison de la direction D1 selon l'angle A1. Ainsi, le long du tronçon 78, la région avant du vantail suit un mouvement ayant par rapport au plan P, une composante transversale de même sens que celle donnée par le tronçon 4.

Cette composante transversale est acceptée par les moyens d'interengagement du bord 51 avec le montant 62, pour des raisons analogues à celles pour lesquelles ils permettent le pivotement du vantail autour du liseré 69 lors du début du mouvement à partir de la position de fermeture.

De plus, pour des raisons de facilité d'installation sur les véhicules, les galets 6 sont légèrement en retrait du bord avant 51, relativement à la direction F du coulissement. Ainsi, lors du pivotement du vantail 1 autour du liseré 69, le galet 6 tend à suivre un arc de cercle qui est assez bien approximé par la direction D2 compte tenu de son inclinaison A2.

Comme le montrent les figures 8 et 9, la porte comprend en outre des moyens de verrouillage du bord arrière 53 du vantail 2, moyens qui n'ont pas été représentés aux autres figures dans un but de clarté.

Ces moyens de verrouillage comprennent deux unités de verrouillage 83 réparties sur la hauteur du vantail 2. L'unité 83 inférieure est commandée par une tringle 84 reliée à un levier inverseur 86 lequel est actionné par un vérin pneumatique 85. De plus, une poignée 87, accessible de l'extérieur de la voiture, et une poignée 91, accessible de l'intérieur de la voiture, sont couplées par des tringles 88 et 92 respectivement, à un actionneur rotatif 89. Ce dernier est coaxial au levier 86 et couplé à ce dernier avec un certain jeu angulaire, déterminé par des butées 93. Dans la position neutre (représentée figure 8) de l'actionneur 89 et des poignées 87 et 91, le jeu angulaire précité permet le libre mouvement du levier 86 sous l'action du vérin 85.

A partir de la position neutre, l'actionneur 89 peut être basculé vers la gauche en une position de condamnation pour bloquer le levier 86 en position de verrouillage tandis qu'un contact non représenté rend inopérant le circuit de commande du vérin 85, et basculé vers la droite pour déverrouiller la porte lorsque le vérin 85 est inopérant.

L'unité de verrouillage supérieure 83 est commandée par une tringle d'accouplement 94 provenant de l'unité de verrouillage inférieure.

Chaque unité 83, fixée au cadre 1, comprend un crochet 96 (figures 9 et 9A) articulé autour d'un axe parallèle à la direction du coulissement et adapté à coopérer avec un tenon 97, de même direction, prévu dans un évidement approprié 98 de la face intérieure du vantail 2.

Le bord 99 de chacun de ces crochets qui vient s'appuyer derrière le tenon 97 associé présente un contour de came, c'est-à-dire non circulaire relativement à l'axe de pivotement du crochet. Plus précisément, la distance entre le bord 99 et l'axe du crochet diminue progressivement depuis la pointe 101 du crochet vers le fond 102 de la concavité du crochet. Cette variation de la distance $d$ est visualisée à la figure 9A par la distance $d1$ à la pointe 101, plus grande que la distance $d2$ à mi-longueur du bord 99, plus grande que la distance $d3$ au voisinage du fond 102 de la concavité du crochet 96. Ainsi, lorsque les tringles 84 et 94 sont tirées vers le bas, de sorte que la pointe 101 de chaque crochet est tirée vers le haut, celles-ci s'engagent derrière les tenons 97 puis rapprochent ceux-ci à force de l'axe immobile de pivotement des crochets. Le vantail est ainsi appliqué à force, au voisinage de son bord arrière 53, contre des butées 103 portées par les boîtiers des unités 83.

Comme le montre la figure 10, dans cette position, la face intérieure du vantail 2, au voisinage du bord arrière 53 du vantail, est appuyée contre le joint 71, soutenu par un profilé en forme d'équerre 106 fixé au cadre 1.

Ainsi, en position de fermeture, le vantail 2 est retenu positivement à l'écart des forces transversales résultant des variations de pression, et ce aussi bien le long de son bord avant 51 que de son bord arrière 53.

Bien entendu, ce n'est qu'à titre d'exemple et pour la clarté de l'exposé qu'on a décrit en détail le mode de stabilisation et d'entraînement du vantail, d'autres types de mécanisme pouvant être envisagés en liaison avec les moyens de retenue faisant l'objet de l'invention.

**Revendications**

1. Porte à mouvement louvoyant comportant un cadre fixe (1) et au moins un vantail coulissant (2) mobile entre une position de fermeture, dans laquelle ledit vantail (2) s'étend dans le cadre (1) sensiblement dans un plan de fermeture (P), et une position d'ouverture, le vantail (2) étant associé à des moyens de guidage (3, 57, 61, 166) liés au cadre pour donner au vantail (2) d'une part un mouvement transversal au cadre (1) de manière à engager transversalement le vantail (2) dans le cadre (1) lors d'un mouvement vers la position de fermeture et à le dégager transversalement du cadre lors d'un mouvement vers la position d'ouverture, et d'autre part, au moins au voisinage de la positon d'ouverture, un mouvement (F) de coulissement sensiblement parallèle au plan de fermeture (P), caractérisée que ce qu'un bord avant (51) du vantail (2) qui est menant lors du mouvement de fermeture, et un montant associé (62) du cadre (1), présentent des moyens (64, 74) d'interengagement mutuel qui assurent une retenue du vantail (2) à l'encontre des efforts transversaux lorsque le vantail (2) est en position de fermeture, ces moyens d'interengagement étant mutuellement interengageables et dégageables par mouvement relatif correspondant à celui du bord avant (51) du vantail (2) par rapport au cadre (1) au voisinage de la position de fermeture.

2. Porte selon la revendication 1, caractérisée en ce que les moyens d'interengagement (64, 74) s'étendent sensiblement sur toute la hauteur du bord avant (51) et/ou du montant (62)

3. Porte conforme à l'une des revendications 1 ou 2, caractérisée en ce que le montant (62) du cadre (1) a une rainure (64) en U dans laquelle le bord avant (51) du vantail (2) est engageable.

4. Porte selon l'une des revendications 1 à 3, caractérisée en ce que les moyens de guidage sont conçus pour guider le bord avant (51) du vantail (2) selon une direction d'interengagement (D2) faisant au plus un petit angle (A2) avec le plan de fermeture (P), entre la position de fermeture du vantail et une position d'ouverture partielle dans laquelle les moyens d'interengagement du bord avant (51) et du montant correspondant (62) du cadre (1) sont mutuellement dégagés.

5. Porte selon la revendication 4, caractérisée en ce que par rapport au plan (P) la direction d'interengagement (D2) présente en raison du petit angle (A2) une inclinaison de même sens qu'une direction oblique (D1) du mouvement transversal.

6. Porte conforme à l'une des revendications 4 ou 5, dans laquelle les moyens de guidage comprennent au moins une glissière (3) liée au cadre (1) dans laquelle est monté coulissant un doigt (6) lié au vantail (2) au voisinage du bord avant (51), cette glissière comprenant un tronçon oblique (4) pour l'engagement du vantail dans le cadre vers la position de fermeture et le dégagement du vantail hors du cadre (1), tronçon dans lequel se trouve le doigt (6) lors du mouvement transversal du vantail (2), caractérisée en ce que la glissière comprend en outre un tronçon (78) s'étendant sensiblement selon la direction d'interengagement (D2) et occupé par le doigt (6) lorsque le vantail (2) est en position de fermeture complète.

7. Porte conforme à l'une des revendications 1 à 6, caractérisée en ce que les moyens de guidage sont d'un type qui, à partir de la position de fermeture, assurent au vantail, au titre du mouvement transversal au plan de fermeture (P), un mouvement initial de pivotement sensiblement autour du bord avant (51), et en ce que les moyens d'interengagement (64, 74) sont conçus pour permettre ce pivotement.

8. Porte conforme à l'une des revendications 1 à 6, comprenant des moyens (103, 107) d'appui du vantail (2) au voisinage d'un bord arrière (53) dudit vantail (2) en position de fermeture, et des moyens (83) de verrouillage du bord arrière du vantail en position de fermeture, caractérisée en ce que les moyens de verrouillage (83) sont du type à effet de came capables de serrer le vantail contre les moyens d'appui (103, 107).

9. Porte conforme à la revendication 8, caractérisée en ce que les moyens de verrouillage comprennent au moins deux unités (83) à effet de came, réparties sur la hauteur du vantail (2).

## FIG_1

## FIG_2

FIG_3

FIG_4

EP 0 312 450 A1

FIG.7

FIG.5

FIG.6

FIG. 8

FIG.9

FIG.10

FIG.9A

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | FR-A-2 133 309  (FAIVELEY S.A.) * Figures 1,4,6,9-11,14-18; page 5, lignes 9-29; page 8, lignes 8-27; page 9, lignes 31-36 * | 1 | B 61 D  19/02 B 60 J   5/06 |
| A | | 2-5,7 | |
| Y,D | DE-C- 695 466  (W. FRIEDEMANN) * Figures 1-4; page 1, colonne de droite, ligne 42 - page 2, colonne de droite, ligne 31 * | 1 | |
| A | | 2 | |
| A | FR-A-2 443 942  (GEBR. BODE & CO.) * Figure 2; page 3, lignes 13-20 * | 1,2 | |
| A | FR-A-2 149 015  (P. LAMBERET) * Figure 3; page 3, ligne 10 - page 4, ligne 32; page 5, ligne 34 - page 6, ligne 4 * | 1,4,5,7 | |
| A | CH-A- 661 692  (FAHRZEUGBAU & KUNSTSTOFFWERK HALLER AG) * Figures 3,4; page 3, lignes 36-38 * | 1,7 | DOMAINES TECHNIQUES RECHERCHES (Int. Cl.4) |
| A | EP-A-0 196 488  (GEBR. BODE & CO. GmbH) * Figures 6,7; page 9 * | 8,9 | A 62 D B 60 J E 05 D E 05 F B 64 C |
| A | GB-A-1 008 729  (WERKSPOOR N.V.) * Figures 1,2; page 2, lignes 7-71 * | 8,9 | |

Le présent rapport a été établi pour toutes les revendications

| Lieu de la recherche | Date d'achèvement de la recherche | Examinateur |
|---|---|---|
| LA HAYE | 05-01-1989 | CHLOSTA P. |